# DEMANDE DE BREVET EUROPEEN

(11) **EP 1 927 425 A1**
(43) Date de publication de la demande: **04.06.2008**
(21) Numéro de dépôt: 07301549.7
(22) Date de dépôt: 14.11.2007
(51) Int. Cl.: B23K 26/06

(54) **Machine laser à fibres d'ytterbium et fibre de convoyage de faisceau de faible diamètre**

(30) Priorité: 29.11.2006 FR 0655171
(71) Demandeur: AIR LIQUIDE WELDING FRANCE, 75007 Paris (FR)
(72) Inventeur: Danhiez, Boris, 79200 Saurais (FR); Bourcier, Olivier, 79200 Le Tallud (FR); Billon, Frédéric, 79200 Chatillon sur Thouet (FR)
(74) Mandataire: Pittis, Olivier

(57) **Abrégé**

Machine de coupage ou soudage laser comprenant une source laser (1) permettant de générer un faisceau laser au moyen d'une ou plusieurs fibres (2) d'ytterbium, au moins une fibre (3) de transport de faisceau connectée à ladite source laser (1) et permettant de convoyer le faisceau laser généré par ladite source laser (1), et une tête de focalisation laser (5). La fibre (3) de transport de faisceau permet de convoyer le faisceau entre la source laser (1) et la tête de focalisation laser (5) a un diamètre de fibre inférieur ou égal à 150 µm. Procédé de coupage laser utilisant une telle machine.

## Description

L'invention porte sur une machine de coupage ou soudage par faisceau laser mettant en oeuvre une fibre de transport de faisceau de diamètre contrôlé.

Les procédés actuels de découpe par faisceau laser peuvent utiliser des sources ou générateurs de faisceau laser dont la longueur d'onde est proche du spectre visible.

Le transport du faisceau entre la machine et la tête laser est effectué par l'intermédiaire d'une fibre optique, comme par exemple en soudage Nd :YAG ou en soudage ou coupage via un laser à diodes.

Actuellement, les fibres de transport de faisceau sont de diamètre en général supérieur à 180 à 200 µm pour permettre une qualité de coupe satisfaisante.

Or, le convoyage du faisceau avec de telles fibres de transport conduit à un diamètre du point de focalisation important, par exemple au moins 0,2 mm et, par conséquent, à une densité d'énergie faible, ce qui pénalise l'efficacité de l'opération de coupage ou de soudage mise en oeuvre.

Particulièrement en coupage laser, cet inconvénient majeur confine la découpe laser des matériaux à des types de sources laser dont la longueur d'onde est loin du spectre visible et dont le faisceau laser est manipulé par des jeux de miroirs, tel que les générateurs laser de type CO₂.

Or, il existe d'autres types de dispositifs laser plus performants qu'il serait souhaitable de pouvoir utiliser en coupage laser, à savoir les dispositifs laser dans lesquels le faisceau est généré par une ou plusieurs fibres mères dopées à l'ytterbium. Ces générateurs laser sont couramment appelés « laser à fibres ».

A titre d'exemple, on peut citer les documents US-A-2005/0041697 et WO-A-2005/053895 qui enseignent l'utilisation de tels laser en coupage.

Toutefois, le document WO-A-2005/053895 décrit un dispositif qui n'est pas industriel mais portatif, ce qui implique que le faisceau n'a pas à être transporté, via une fibre de convoyage, avant d'être utilisé puisque qu'il est directement focalisé en sortie du module servant à le générer et contenant les fibres dopées à l'ytterbium. Le problème de convoyage du faisceau laser par une fibre de transport ne se pose donc pas.

Le document US-A-2005/0041697 décrit un dispositif dans lequel le faisceau est convoyé jusqu'à la tête de focalisation par une fibre de convoyage. Cependant, les caractéristiques de la fibre de convoyage à utiliser ne sont pas précisées. On peut donc supposer qu'il s'agit d'une fibre classique de diamètre supérieur à 180 µm.

Le problème à résoudre est donc d'améliorer les procédés et dispositifs de coupage ou de soudage par faisceau laser industriels mettant en oeuvre des fibres de transport de faisceau qui habituellement réduisent de manière importante les performances de coupe par laser des matériaux, en particulier des métaux.

En d'autres termes, la présente invention vise à proposer un procédé et une machine de soudage ou de coupage par faisceau laser mettant en oeuvre une ou plusieurs fibres de transport de faisceau conduisant à un diamètre du point de focalisation plus faible que dans les procédés et machines classiques, par exemple inférieur à 0,2 mm et donc à une densité d'énergie plus importante que dans ces procédés classiques.

La solution selon l'invention est une machine de coupage ou soudage laser comprenant une source laser permettant de générer un faisceau laser au moyen d'une ou plusieurs fibres d'ytterbium, au moins une fibre de transport de faisceau connectée à ladite source laser et permettant de convoyer le faisceau laser généré par ladite source laser, et au moins une tête de focalisation, caractérisée en ce que la fibre de transport de faisceau permettant de convoyer le faisceau entre la source laser et la tête de focalisation laser a un diamètre de fibre inférieur ou égal à 150 µm.

Selon le cas, la machine de l'invention peut comprendre l'une ou plusieurs des caractéristiques suivantes :
- ladite fibre de convoyage ne contient pas d'ytterbium, c'est-à-dire qu'elle n'est pas dopée à l'ytterbium comme la ou les fibres-mères ou fibres d'ytterbium servant à générer le faisceau laser.
- la machine comporte plusieurs fibres d'ytterbium servant à générer chacune un faisceau laser et reliées chacune à un dispositif de couplage servant à recueillir et coupler les faisceaux laser générés par lesdites fibres d'ytterbium de manière à obtenir un faisceau laser unique résultant de la combinaison des différents faisceaux laser générés par lesdites fibres, de préférence lesdites fibres d'ytterbium sont agencées chacune dans un module interne de la source laser.
- on raccorde la fibre de transport de faisceau à la sortie du dispositif de couplage agencé en sortie de la source laser. Autrement dit, la fibre de transport de faisceau est reliée à la source laser au moyen d'un dispositif de couplage, tel un connecteur opto-mécanique, encore appelé «coupleur».
- la fibre de transport de faisceau a un diamètre de fibre compris entre 10 et 150 µm.
- la fibre de transport de faisceau a un diamètre de fibre inférieur à 140 µm, de préférence inférieur à 130 µm.
- la fibre de transport de faisceau a un diamètre de fibre supérieur à 10 µm, de préférence supérieur à 20 µm.
- la fibre de transport de faisceau a un diamètre de fibre de l'ordre de 45 à 55 µm, par exemple de l'ordre de 50 µm.
- selon le cas, la fibre de transport de faisceau a un diamètre de fibre de l'ordre de 95 à 105 µm, par exemple de l'ordre de 100 µm.
- elle comporte plusieurs fibres de transport de faisceau agencées en parallèle.
- les fibres de transport de faisceau agencées en parallèle ont des diamètres différents les uns des autres.
- la tête de focalisation comprend des moyens de focalisation, tel que lentille ou miroirs, et un dispositif de collimation servant à contrer la divergence naturelle de la fibre de transport
- la ou les fibres de transport sont de type à coeur en quartz avec revêtement en silice, et gaine plastique et/ou métallique périphérique.

Par ailleurs, l'invention porte aussi sur un procédé de coupage ou soudage laser, en particulier de coupage laser, dans lequel :
a) on génère un faisceau laser au moyen d'une source laser renfermant une ou plusieurs fibres d'ytterbium servant à générer ledit faisceau laser,
b) on récupère, en sortie de ladite source laser, le faisceau généré par la source laser contenant la ou les fibres d'ytterbium,
c) on introduit le faisceau récupéré en b) dans au moins une fibre de transport de faisceau connectée à la sortie de ladite source laser,
d) on convoie le faisceau laser généré par ladite source laser jusqu'à une tête de focalisation au moyen de ladite au moins une fibre de transport de faisceau connectée à ladite source laser,
caractérisée en ce qu'à l'étape d), on utilise une fibre de transport de faisceau ayant un diamètre de fibre inférieur à 150 µm.

Selon le cas, le procédé de l'invention peut comprendre l'une ou plusieurs des caractéristiques suivantes :
- à l'étape b), le faisceau généré par la source laser contenant la ou les fibres d'ytterbium est récupéré en sortie d'un dispositif de couplage.
- la fibre de convoyage est connectée en sortie du dispositif de couplage agencé lui-même en sortie de la source laser.
- ladite fibre de convoyage ne contient pas d'ytterbium,
- à l'étape d), on convoie le faisceau laser jusqu'à une tête de focalisation laser et on opère un soudage ou un coupage d'au moins une pièce à souder ou à couper.
- à l'étape d), on utilise une fibre de transport de faisceau ayant un diamètre de fibre compris entre 10 et 120 µm.
- dans la tête de focalisation, on opère une focalisation et une collimation du faisceau laser préalablement à son envoi vers la pièce à couper. La modification des caractéristiques du faisceau laser par la (les) optique(s) de collimation permet d'ajuster le diamètre du faisceau sur la lentille de focalisation. Ceci permet le réglage de la densité de puissance sur cette lentille de manière à stabiliser et homogénéiser les effets de lentille thermiques dus à la dilatation du substrat utilisé pour la réalisation de la lentille de focalisation. Ce moyen de réglage de collimation a aussi pour conséquence la modification des caractéristiques du faisceau laser au point de focalisation. Ces caractéristiques dépendent également de la distance focale choisie, à savoir classiquement de l'ordre de 3.75 pouces (environ 9,4 cm) à 10 pouces (environ 25 cm) pour des applications de découpe par faisceau laser généré par des sources laser de type CO₂.

Toutefois, selon la présente invention, on peut aussi utiliser des distances focales beaucoup plus importantes, par exemple de l'ordre de 200 à 400 mm, et plusieurs lentilles de focalisation pouvant aussi être utilisées successivement sur l'installation dans le but d'usiner des matériaux de nature et épaisseurs différentes, par exemple des aciers noirs et des aciers inoxydables.

Par ailleurs le fait d'utiliser des lentilles de distances focales longues par rapport aux procédés 'classiques' permet d'obtenir des distances de Rayleigh très longues, la zone de densité d'énergie constante autour du point de focalisation est ainsi augmentée. Ceci engendre une plus grande stabilité du procédé au niveau de la variation de la position du point focal durant la phase de découpe par exemple. La faible dimension du diamètre de faisceau en amont de la lentille de focalisation ainsi que des distances focales importantes permettent alors à l'installation laser de présenter de meilleures performances en termes de vitesses de découpe et de stabilité de procédé.

L'invention va maintenant être décrite plus en détail grâce à la description illustrative suivante, faite en références aux Figures annexées.

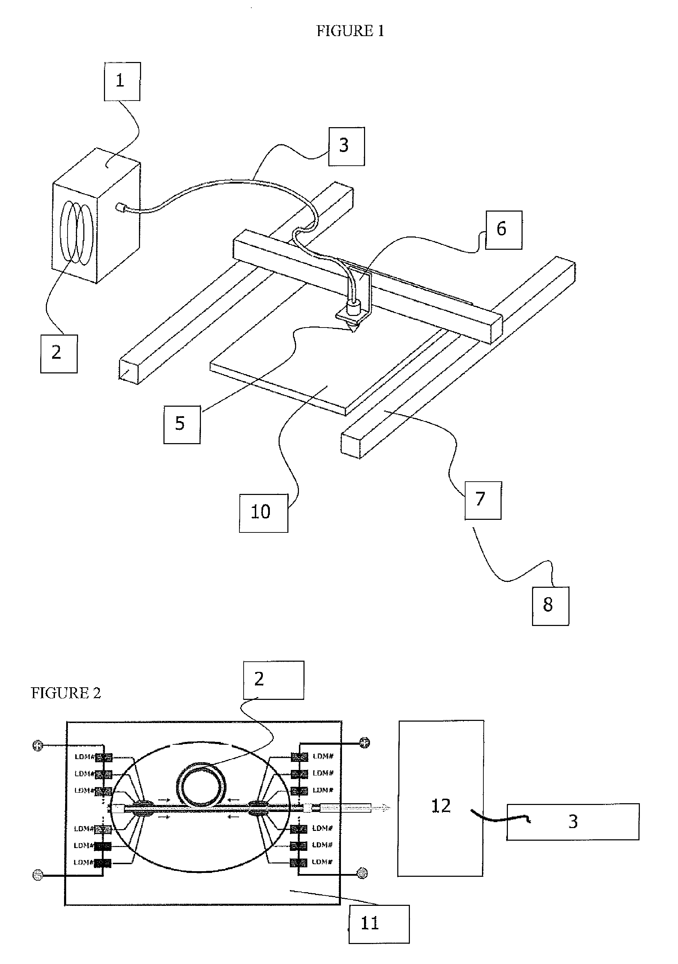

La Figure 1 annexée schématise une machine de coupage laser selon l'invention comprenant un générateur de faisceau ou source laser 1 permettant de générer un faisceau laser au moyen d'une ou plusieurs fibres 2 d'ytterbium. Plus précisément, l'amplification et le pompage optique sont obtenus par réflexion sur les faces internes d'une fibre optique, l'excitation étant effectuée par un réseau de lasers à diode.

En d'autres termes, la source laser 1 comporte plusieurs modules 11 internes, comme visible en Figure 2, servant à générer un faisceau laser, chaque module 11 comprenant une fibre 2 d'ytterbium. Plus précisément, les pré-faisceaux générés par chaque module 11 sont collectés puis couplés les uns aux autres dans un dispositif de couplage 12 ou « coupleur » interne à la source 1.

Le faisceau laser ainsi obtenu en sortie du dispositif de couplage 12, donc au niveau de la sortie aval de la source laser 1, est récupéré et introduit dans au moins une fibre optique 3 de transport ou convoyage.

Comme on le voit sur la Figure 1, afin d'assurer un transport du faisceau jusqu'à son lieu d'utilisation, la fibre optique 3 de convoyage de faisceau est donc connectée à la sortie aval de la source laser 1 de manière à pouvoir recueillir puis véhiculer le faisceau laser généré par la source laser 1 jusqu'à une tête de focalisation 5 positionnée face à une pièce 10 à couper, par exemple une tôle en acier au carbone, en acier inoxydable, en aluminium ou autre.

En fait, la fibre de convoyage peut amener le faisceau jusqu'à la tête de focalisation, directement ou par l'intermédiaire d'un second dispositif de couplage situé immédiatement en amont de ladite tête de focalisation, ce qui permet notamment de faciliter la maintenance de l'installation.

La (ou les) fibre optique 3 de transport de faisceau diffère des fibres d'ytterbium servant à générer le faisceau. En effet, la fibre optique 3 de transport ne contient pas d'ytterbium. La ou les fibres de transport utilisées sont par exemple de type à coeur en quartz, revêtement en silice fondue, et gaine plastique et/ou métallique.

Cette fibre de convoyage permet, dans une installation industrielle, de transporter le faisceau entre la source laser où il est généré jusqu'à son point d'utilisation, c'est-à-dire la tête de focalisation située sur la machine de coupage ou de soudage, en général à plusieurs axes, et qui se trouve en général éloignée de plusieurs mètres de la source laser, typiquement d'au moins 3 mètres de la source, en général d'au moins 5 mètres de la source.

De ce fait, une fibre de transport a préférentiellement une longueur d'au moins 17 mètres, souvent même d'au moins 25.

La connexion de la fibre 3 de transport de faisceau à la source 1 se fait par l'intermédiaire d'un connecteur opto-mécanique permettant d'injecter le faisceau sortant de la source dans la fibre 3 de transport. Ce connecteur est agencé au niveau de la source laser 1.

Le découplage de la fibre au niveau du connecteur nécessite au moins un outillage de sorte que l'opérateur ne puisse extraire la fibre manuellement, ceci pour des raisons de sécurité. Un contacteur électrique de sécurité interdit l'activation du faisceau laser en cas de découplage. Le refroidissement de l'unité de raccordement ainsi que du collimateur peut être assuré par circulation d'un fluide caloriporteur, typiquement de l'eau comportant des agents anti-gel et anti-corrosion.

Selon l'invention, on utilise une (ou plusieurs) fibre 3 de transport ou convoyage de faisceau ayant un diamètre de fibre inférieur à 150 µm, de préférence inférieur à 130 µm En effet, l'utilisation d'une fibre 3 de transport de faible diamètre, à savoir inférieur à 150 µm, combinée à un générateur de faisceau laser à fibres 2 d'ytterbium servant à générer le faisceau permet d'obtenir un diamètre de faisceau laser suffisamment petit pour pouvoir être introduit dans la fibre de transport 3 de faible diamètre, c'est-à-dire de diamètre inférieur à 150 µm, préférentiellement entre 10 et 150 µm, en étant convoyé ainsi jusqu'à la tête de focalisation 5.

En d'autres termes, une fibre 3 de transport de diamètre inférieur à 150 µm selon l'invention ne peut être utilisée que lorsque le faisceau a été généré par une source laser dit « à fibres d'ytterbium ». La ou les fibres dopée à l'ytterbium servant à la génération du faisceau laser de puissance sont de structure analogue à celle des fibres de transport ci-dessus, à la différence que le coeur de la fibre est dopé avec de l'ytterbium qui est un élément optiquement actif lorsqu'il est excité de façon optique, c'est-à-dire par pompage, par injection de faisceau de laser à diode, par exemple 19 diodes par injection pour un total de 380 W/module ; en général, plusieurs modules sont utilisés simultanément.

La machine selon l'invention est préférentiellement agencée sur une installation de coupage laser automatisée comprenant un bâti porteur 7 avec poutre mobile 8 sur ledit bâti, sur laquelle est fixée la tête 5 de focalisation dans laquelle arrive la fibre de convoyage 3.

La tête 5 peut se déplacer sur la poutre 8, alors que la poutre 8 peut elle-même se déplacer sur le bâti 6. Les déplacements de la tête 5 sont préférentiellement opérés au moyen d'actionneurs 6 linéaires ou rotatifs, permettant par l'intermédiaire de systèmes numérisés, d'automates et de commandes numériques d'obtenir des formes programmées.

Des essais comparatifs réalisés ont montré qu'en soudage, à caractéristiques métallurgiques équivalentes, à savoir même matériau et mêmes conditions mécaniques, et à puissance de source laser identique, les profondeurs de pénétration du cordon de soudure utilisant une source dite « à fibre » selon l'invention sont supérieures de 30% aux profondeurs de pénétration du cordon de soudure utilisant une source de type « Nd :YAG » selon l'art antérieur mettant en oeuvre une fibre de transport de diamètre d'au moins 180 µm.

En outre, d'autres essais opérés en découpe, à caractéristiques métallurgiques équivalents, à savoir même matériau et mêmes épaisseurs coupées, et à puissance de source laser identique, les vitesses de découpe utilisant une source dite « à fibre » selon l'invention sont supérieures de près de 30% aux vitesses de découpe utilisant une source classique de type YAG mettant en oeuvre une fibre de transport de diamètre d'au moins 180 µm, et sont supérieures de près de 50% aux vitesses de découpe utilisant une source classique de type « CO₂ » avec un chemin optique à miroirs.

De même, en utilisant une fibre de convoyage non dopée à l'ytterbium de faible diamètre selon l'invention, c'est d'un diamètre de 100 µm environ, agencée en sortie de la source laser à fibres d'ytterbium, les vitesses de découpe obtenues sont nettement supérieures aux vitesses de découpe utilisant la même source laser mais mettant en oeuvre une fibre de transport de diamètre d'au moins 180 µm.

## Revendications

1. Machine de coupage ou soudage laser comprenant :
- une source laser (1) permettant de générer un faisceau laser au moyen d'une ou plusieurs fibres (2) d'ytterbium,
- au moins une fibre (3) de transport de faisceau connectée à ladite source laser (1) et permettant de convoyer le faisceau laser généré par ladite source laser (1), et
- une tête de focalisation laser (5),
**caractérisée en ce que** la fibre (3) de transport de faisceau permettant de convoyer le faisceau entre la source laser (1) et la tête de focalisation laser (5) a un diamètre de fibre inférieur ou égal à 150 µm.

2. Machine selon la revendication 1, **caractérisée en ce que** la fibre (3) de transport de faisceau a un diamètre de fibre inférieur à 140 µm, de préférence inférieur à 130 µm.

3. Machine selon l'une des revendications 1 ou 2, **caractérisée en ce que** la fibre (3) de transport de faisceau a un diamètre de fibre supérieur à 10 µm, de préférence supérieur à 20 µm

4. Machine selon l'une des revendications 1 à 3, **caractérisée en ce que** la fibre (3) de transport de faisceau a un diamètre de fibre compris entre 10 et 150 µm.

5. Machine selon l'une des revendications 1 à 4, **caractérisée en ce que** la fibre (3) de transport de faisceau est reliée à la source laser (1) au moyen d'un dispositif de couplage, de préférence un connecteur opto-mécanique.

6. Machine selon l'une des revendications 1 à 5, **caractérisée en ce qu'**elle comporte plusieurs fibres d'ytterbium servant à générer chacune un faisceau laser et reliées chacune à un dispositif de couplage servant à recueillir et coupler les faisceaux laser générés par lesdites fibres d'ytterbium de manière à obtenir un faisceau laser unique résultant de la combinaison des différents faisceaux laser générés par lesdites fibres, de préférence lesdites fibres d'ytterbium sont agencées chacune dans un module interne de la source laser.

7. Machine selon l'une des revendications 1 à 6, **caractérisée en ce qu'**elle comporte plusieurs fibres (3) de transport de faisceau agencées en parallèle, de préférence les fibres (3) de transport de faisceau agencées en parallèle ont des diamètres différents les uns des autres.

8. Procédé de coupage ou soudage laser, dans lequel :
a) on génère un faisceau laser au moyen d'une source laser (1) renfermant une ou plusieurs fibres (2) d'ytterbium servant à générer ledit faisceau laser, et
b) on convoie le faisceau laser généré par ladite source laser (1) jusqu'à une tête de focalisation au moyen d'au moins une fibre (3) de transport de faisceau connectée à ladite source laser (1),
**caractérisée en ce qu'**à l'étape b), on utilise une fibre (3) de transport de faisceau ayant un diamètre de fibre inférieur à 150 µm.

9. Procédé selon la revendication 8, **caractérisé en ce qu'**à l'étape b), on convoie le faisceau laser jusqu'à une tête de focalisation (5) laser et on opère un soudage ou un coupage d'au moins une pièce (10) à souder ou à couper.

10. Procédé selon l'une des revendications 8 ou 9, **caractérisé en ce qu'**à l'étape b), on utilise une fibre (3) de transport de faisceau ayant un diamètre de fibre compris entre 50 et 120 µm.
